(19) Europäisches Patentamt
European Patent Office
Office européen des brevets

(11) Publication number: 0 376 380 A1

(12) # EUROPEAN PATENT APPLICATION

(21) Application number: 89203234.3

(22) Date of filing: 18.12.89

(51) Int. Cl.5: C09K 19/38, C08G 63/68, C08G 69/44

(30) Priority: 28.12.88 NL 8803182

(43) Date of publication of application: 04.07.90 Bulletin 90/27

(84) Designated Contracting States: AT BE CH DE ES FR GB GR IT LI NL SE

(71) Applicant: STAMICARBON B.V.
Mijnweg 1
NL-6167 AC Geleen(NL)

(72) Inventor: Vriesema, Bindert Klaas
Burg. Luytenstraat 47
NL-6151 GE Sittard(NL)
Inventor: Miniaci, Francesco
Zenobe Grammestraat 12
B-3600 Genk(BE)

(54) **Polymer processeable from the melt.**

(57) The invention relates to an aromatic polymer with liquid-crystalline behaviour processable from the melt, the polymer having one or more trifunctional triazine units according to formula (I):

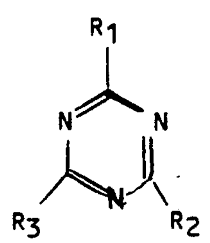

(I)

where $R_1$ is an amino group, $R_2$ and $R_3$ are (alkyl)carboxy, (alkyl)hydroxy and/or amino groups.

In addition to excellent mechanical properties, the polymer according to the invention has a very good thermal shock resistance and will be used particularly in electrical engineering and in the aircraft industry.

EP 0 376 380 A1

## POLYMER PROCESSABLE FROM THE MELT

The invention relates to an aromatic polymer with liquid-crystalline behaviour processable from the melt containing a triazine unit and monomers, capable of forming an liquid crystalline polymer.

Aromatic polymers that can be processed from the melt are widely used in the production of, inter alia, fibres and articles having good mechanical properties and a high thermal stability.

In the processing of such a polymer with liquid-crystalline behaviour, anisotropy occurs under the influence of shearing forces, so that the strength perpendicular to the direction of processing or orientation lags far behind the strength in the direction of processing or orientation.

EP-B-0083426 discloses that with the incorporation of a compound containing trifunctional groups, polyesters with liquid-crystalline properties can be obtained that can be processed in the melt, which polyesters have improved strength perpendicular to the direction of processing or orientation. The functional groups of the compound to be incorporated contain either just hydroxyl or just carboxyl functions. Further, various demands are made in respect of the polyester units.

According to the comparative examples in EP-B-0083426, the transverse strength of fibres, expressed in knot strength, can be improved without further treatment by c. 25%. Only after a prolonged heat treatment of the spun fibre is it possible to achieve an improvement by a factor 2. This last-mentioned process, however, has a negative effect on the mechanical properties in the longitudinal direction of the fibre. The initial modulus, for instance, decreases by c. 30%.

DE-A-2157696 describes polyesters derived from triazine-units and monomers which are capable of forming a liquid crystalline polymers. The disadvantage of DE-A-2157696 is that after a the prepolymerisation step of the monomers, which are capable of forming a liquid crystalline polymers, the reaction temperature is reduced and low molecular units are added which are capable of forming triazine units. The latter reaction takes place during at least 7 hours. After this period the temperature is raised and the linkage of the liquid crystalline (pre-)polymers and the triazine units takes place.

However the monomers linked to the triazineunits are linked by a C-O-bond. There is no mentioning of an amide-bond for obtaining a polyesteramide.

Now the object of the invention is to provide a polymer in which a substantial improvement of the mechanical properties perpendicular to the direction of orientation is achieved without having to subject the moulding compound obtained from the melt to an after-treatment, while the properties in the direction of orientation continue to be of at least the same standard.

The polymer processable from the melt according to the invention is characterized in that the polymer contains one or more trifunctional triazine units according to formula (I) .

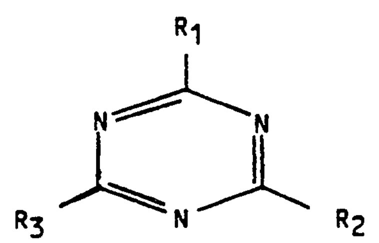

(I)

where $R_1$ is an amino group, $R_2$ and $R_3$ are (alkyl)alkoxy, (alkyl)carboxy and/or amino groups.

It has surprisingly been found that by using a triazine unit in the polymer according to the invention not only a substantial improvement of the mechanical properties in the direction perpendicular to the direction of orientation can be achieved without any extra treatment, or heat treatment, of the resulting product being required, but also that the modulus of elasticity parallel to the direction of orientation has improved considerably. It has, moreover, been found that the polymer according to the invention has a very good thermal shock resistance.

The triazine units are considered to be the nuclei on which three linear polymer chains are substituted. The resulting polymer then has a $QX_3$ structure where Q is the triazine unit.

The triazine unit is preferably obtained from melamine (2,4,6-triamino-1,3,5-triazine), from cyanuric acid (2,4,6-triazine triol) or from cyanuric chloride (2,4,6-tri-1,3,5-chlorotriazine). The preparation and synthesis of such triazine units is extensively described in The Chemistry of Heterocyclic Compounds, S-triazine and Derivatives, Edwin M. Smolin and Lorence Rapoport, 1959, Interscience Publishers, New York, mentioned as reference.

The triazine unit in the polymer is derived particularly from melamine.

The melamine content of the polymer according to the invention may vary within wide limits and is determined to a high degree by the length of the polymer chains on the melamine skeleton and by the desired viscosity of the polymer, which influences the processability. Generally, contents lower than 0.01 mole % melamine calculated on the total weight of polymer-forming units will have no effect worth mentioning and contents beyond 10 moles % will result, even in low-molecular polymers, in an unacceptable increase of the melt viscosity, which makes the processing of the polymer with the customary techniques impossible. The chosen melamine content is preferably between 0.01 and 2 moles %. Even more preferably between 0.01 and 1 mole %.

The invention is particularly effective with aromatic polymers containing, in addition to melamine,

(a) units with an oxy and a carbonyl group,
(b) units with two oxy groups, and
(c) units with two carbonyl groups.

The unit with an oxy and a carbonyl group is chosen depending on the desired properties of the polymer. Such a unit generally has a formula

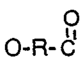 , where R contains at least an aromatic ring, for instance:

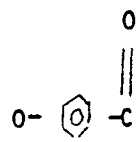

(II)

(IIa)

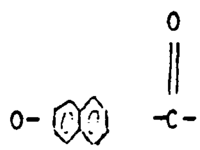

The polymer according to the invention preferably contains oxybenzoyl units with formula (II). These units come from hydroxybenzoic acid or from derivatives of these. The oxybenzoyl unit as (II) may be para or meta-substituted. Mixtures of para and meta-substituted oxybenzoyl units with formula (II) are possible also. Unit (II) is preferably para-substituted. In the aromatic ring one or more of the hydrogen atoms may be substituted by an alkyl or alkoxy group, with one to four carbon atoms, by a halogen, for instance chlorine, bromine and fluorine, and/or by a phenyl group, which is substituted if so desired. The oxybenzoyl unit is preferably derived from p-hydroxybenzoic acid.

The polymer preferably contains 20-70 moles % oxybenzoyl units, calculated on the whole polymer.

Units with two oxy groups generally have a formula O-R-O, where R at least contains an aromatic ring, examples are:

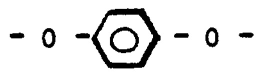
(IIIa)

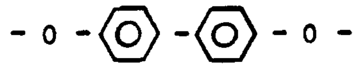
(IIIb)

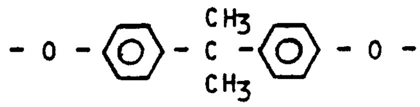
(IIIc)

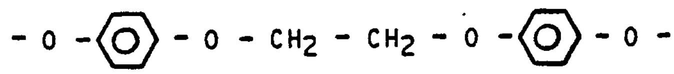
(IIId)

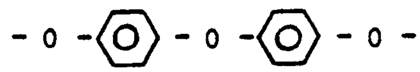
(IIIe)

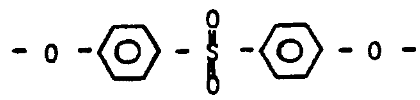
(IIIf)

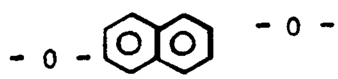
(IIIg)

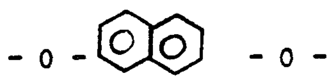
(IIIh)

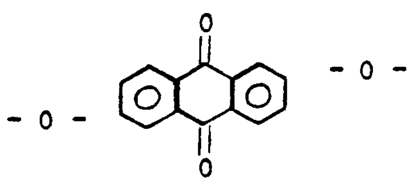
(IIIi)

The polymer according to the invention may also contain mixtures of the above-mentioned units. The polymer according to the invention preferably contains dioxybenzyl (IIIa) and/or biphenoxy (IIIb) groups, more particularly a biphenoxy group with formula (IIIb). The last-mentioned compound can be obtained from p,p′-biphenol. In the aromatic rings one or more hydrogen atoms may be substituted by an alkyl and/or alkoxy group, a halogen and/or a phenyl group, which may itself be substituted, too. The polymer preferably contains 5-40 moles % units with two oxy groups.

The aromatic units with two carbonyl groups can be obtained from aromatic dicarboxylic acids or from the corresponding esters, for instance terephthalic acid, isophthalic acid, 2,6-naphthalenedicarboxylic acid, 2,7-naphthalenedicarboxylic acid, bibenzoic acid, 4,4′-dicarboxyldiphenylsulphone, 4,4′-dicarboxyldiphenylethane, 4,4′-dicarboxyldiphenylsulphide, 4,4′-dicarboxylphenylether, 4,4′-dicarboxyldiphenylmethane, 4,4′-dicarboxyldiphenoxyethane, 2,2-bis (4-carboxylphenyl)-propane.

The aromatic units with two carbonyl groups have preferably been obtained from terephthalic acid, isophthalic acid and/or the derivatives thereof. In the aromatic ring one or more hydrogen atoms may have been substituted by an alkyl and/or alkoxy group, a halogen and/or a phenyl group, which last-mentioned group may have been substituted, too. The units with two carbonyl groups are preferably obtained from unsubstituted terephthalic acid and/or isophthalic acid. The polymer preferably contains 5-40 moles % units with two carboxyl groups.

If so desired, the polymer may also contain 0-30 moles % of an amine-containing unit, which can be

obtained, inter alia, from substances known in the art, for instance p-aminobenzoic acid, p-aminophenol, p-N-methyl-aminophenol, p-phenylenediamine, N-methyl-p-phenylenediamine, N,N′-dimethyl-p-phenylenediamine, m-aminophenol, 4-amino-1-naphthol, 4-amino-4′-hydroxydiphenol, 4-amino-4′-hydroxyphenylether, 4-amino-4′-hydroxydiphenylmethane, 4-amino-4′-hydroxydiphenylethane, 4-amino-4′-hydroxydiphenylsulphone, 4-amino-4′-hydroxydiphenylsulphide, 4,4′-diaminophenylsulphide, 4,4′-diaminodiphenylsulphone, 2,5-diaminotoluene, 4,4′-ethylenediamine, 4,4′-diaminodiphenoxyethane, 4,4′-diaminodiphenylmethane, 4,4′-diaminodiphenylether.

In addition to the above-mentioned units, the polymer may also contain sulphone, urethane, carbonate, anhydride and/or thioester groups.

The preparation of the polymer according to the invention can be effected by means of a polycondensation reaction, by reacting with each other in the desired amounts, after acetylation, in an inert atmosphere and at elevated temperature and reduced pressure the monomers to be used. Melamine can be metered simultaneously with the polymer-forming units or be added to the reaction system virtually at the end of the polycondensation reaction. Preferably in the presence of a catalyst, for instance magnesium and/or zinc acetate.

Melamine is preferably added only after the polycondensation reaction is virtually finished, that is when the conversion is 96% at most, so that already linear polycondensation chains with a desired degree of polymerisation have been formed. The chains are then substituted on the melamine. The effect of the incorporation of melamine can be determined forthwith by means of the change of the melt viscosity. Melamine can be added in a dissolved state, for instance in a high-boiling inert solvent, or as a solid in the form of a powder. Preference is given to its addition as a solid in a finely distributed form. After cooling of the reactor contents, the polymer composition is obtained in a solid form. If so desired, the polymer composition can be after-condensed in the solid state at elevated temperature.

In addition to the melamine substituted with polymer chains, the polymer will also contain an amount of free linear polymer chains not reacted with melamine. This amount of free polymer chains depends on the amount of melamine added and determines in part the processability of the polymer when these free polymer chains occur in large amounts.

Owing to the high mechanical properties, particularly the high modulus of elasticity, and the good thermal shock resistance, the polymer according to the invention is particularly suited for application as fibre or film in notably the textile and packaging industries.

Articles produced in whole or in part from the polymer according to the invention have excellent properties as far as their tensile strength and their chemical and heat resistance are concerned. Consequently, the polymer according to the invention is perfectly suited for use in the electrical engineering industry and in the aircraft industry.

To the polymer composition according to the invention the usual additives can be added, for instance glass, stabilizers, lubricants and organic and inorganic fillers and reinforcing agents.

The invention will be further elucidated with the following examples without being limited thereto.

## Comparative example A

Into a reaction vessel with stirrer, nitrogen feed pipe and reflux condenser 850 g acetic anhydride was introduced. To it was added:

3.2 moles p-hydroxybenzoic acid,
1.6 moles terephthalic acid,
1.6 moles p,p′-biphenol,
1 g zinc acetate.

The suspension was heated to 155¤C and kept constant for 1-3 hours (refluxing). Subsequently, the reflux condenser was converted to form a distillation unit. The temperature was raised by 46¤C/hour to 315¤C and subsequently kept constant till the desired conversion was reached (92%).

After cooling to room temperature, the resulting polymer was ground, after-condensed (12 hours, 365¤C) and characterized using Differential Scanning Calorimetry (DSC). Melt temperature (Tm) = 401¤C.

Characterization of injection-moulded plates, 1.6 mm thick:

| | parallel | perpendicular |
|---|---|---|
| E-modulus ($N/mm^2$) | 17,000 | 3,000 |

Example 1

The same as comparative example 1, however using:
3.2 moles p-hydroxybenzoic acid,
1.6 moles terephthalic acid,
1.6 moles p,p′-biphenol,
1 g zinc acetate.
At the end of the prepolymerisation (after 92% conversion) 0.01 mole melamine was added and the polymerization was continued for three minutes more.

After cooling to room temperature, the resulting polymer was ground, after-condensed (12 hours, 365¤C) and characterized using Differential Scanning Calorimetry (DSC). Melt temperature (Tm) = 411¤C.

Characterization of injection-moulded plates, 1.6 mm thick:

| | parallel | perpendicular |
|---|---|---|
| E-modulus ($N/mm^2$) (ASTM D-790) | 20,100 | 3,900 |

Example 2

The same as example 1, however using:
3.2 moles p-hydroxybenzoic acid,
1.6 moles terephthalic acid,
1.6 moles p,p′-biphenol,
0.01 mole melamine, added simultaneously with the other polymer-forming units, and
1 g zinc acetate.

After cooling to room temperature, the resulting polymer was ground, after-condensed (12 hours, 365¤C) and characterized using Differential Scanning Calorimetry (DSC). Melt temperature (Tm) = 410¤C.

Characterization of injection-moulded plates, 1.6 mm thick:

| | parallel | perpendicular |
|---|---|---|
| E-modulus ($N/mm^2$) (ASTM D-790) | 17,500 | 3,800 |

Comparative example B

The same as example 1, however using:
3.2 moles p-hydroxybenzoic acid,
1.6 moles terephthalic acid,
1.6 moles p,p′-biphenol,
0.01 mole 1,3,5-benzenetricarboxylic acid,
1 g zinc acetate.

After cooling to room temperature, the resulting polymer was ground, after-condensed (12 hours, 365¤C) and characterized using Differential Scanning Calorimetry (DSC). Melt temperature (Tm) = 406¤C.

Characterization of injection-moulded plates, 1.6 mm thick:

| | parallel | perpendicular |
|---|---|---|
| E-modulus ($N/mm^2$) (ASTM D-790) | 12,700 | 3,200 |

## Claims

1. An aromatic polymer with liquid-crystalline behaviour processable from the melt containing a triazine unit and monomers, capable of forming an liquid crystalline polymer, characterized in that the polymer has one or more trifunctional triazine units according to formula (I):

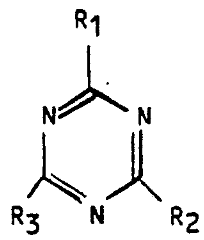

(I)

where $R_1$ is an amino group, $R_2$ and $R_3$ are (alkyl)carboxy, (alkyl)hydroxy and/or amino groups.

2. Polymer according to claim 1, characterized in that the triazine unit is derived from melamine and/or cyanuric acid.

3. Polymer according to claims 1-2, characterized in that the triazine unit is derived from melamine.

4. Polymer according to claim 3, characterized in that the polymer contains 0.01 to 10 moles % triazine units derived from melamine.

5. Polymer according to claim 4, characterized in that the polymer contains 0.01 to 2 moles % triazine units derived from melamine.

6. Polymer according to claim 5, characterized in that the polymer contains 0.01-1 mole % triazine units derived from melamine.

7. Polymer according to claim 1, characterized in that the polymer comprises:
   a. 0.01-10 moles % of a trifunctional triazine unit
   b. 20-70 moles % of a -Z-Ar-Y-unit
   c. 5-40 moles % of a -Z-Ar-Z-unit
   d. 5-40 moles % of a -Y-Ar-Y-unit where

Ar is at least one phenyl group;

Z = -O-; Y = $-\overset{O}{C}-$.

8. Process for preparing the polymer according to any one of the preceding claims by reacting aromatic monomers and a triazine unit in the melt, the process being characterized in that the triazine unit is added at the moment when the polymer has virtually reached the desired degree of polymerization based on a degree of conversion of 96% at most, upon which the reaction is continued for yet a short while with subsequent after-condensation, if so desired, in the solid phase at elevated temperature after cooling of the reaction product.

9. Moulding compound obtained from the polymer according to any one of claims 1-7.

10. Fibre obtained from the polymer according to any one of claims 1-7.

11. Polymer wholly or partly described in the specification and in the examples.

European Patent Office

# EUROPEAN SEARCH REPORT

Application Number

EP 89 20 3234

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | DE-A-2 157 696 (THE CARBORUNDUM)<br>* Claims 1-47 *<br>--- | 1-11 | C 09 K 19/38<br>C 08 G 63/68<br>C 08 G 69/44 |
| X | EP-A-0 215 740 (CIBA-GEIGY)<br>* Claims 1-19 *<br>--- | 1-8 | |
| D,A | EP-A-0 083 426 (E.I. DU PONT)<br>* Claims 1-20 *<br>----- | | |

TECHNICAL FIELDS SEARCHED (Int. Cl.5)

C 08 G

The present search report has been drawn up for all claims

| Place of search | Date of completion of the search | Examiner |
|---|---|---|
| THE HAGUE | 11-04-1990 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document